# FASCICULE DE BREVET EUROPEEN

(11) **EP 0 674 775 B1**
(45) Date de publication et mention de la délivrance du brevet: **01.04.1998**
(21) Numéro de dépôt: 94931071.8
(22) Date de dépôt: 17.10.1994
(51) Int. Cl.: G02B 23/00, G02B 17/06

(54) **TELESCOPE POUR IMAGERIE INFRAROUGE OU VISIBLE**
TELESKOP ZU ABBILDUNGSZWECKEN IM INFRAROT ODER SICHTBAREM SPEKTRUM
TELESCOPE FOR INFRARED OR VISIBLE IMAGING

(30) Priorité: 15.10.1993 FR 9312302
(43) Date de publication de la demande: 04.10.1995
(73) Titulaire: MATRA MARCONI SPACE FRANCE S.A., 75116 Paris (FR)
(72) Inventeur: PASTERNAK, Frédérick, F-31590 Gaure (FR)
(74) Mandataire: Loisel, Bertrand
(86) Numéro de dépôt international: FR9401198
(87) Numéro de publication internationale: WO9510793

(56) Documents cités:
- EP-A- 0 267 766
- GB-A- 2 244 145
- US-A- 3 927 254
- US-A- 4 101 195
- US-A- 5 144 496
- APPLIED OPTICS, vol.17, no.17, 1 Septembre 1978, US pages 26772 - 2685 P.N.ROBB 'three mirror telescopes design and optimization'

## Description

La présente invention concerne un télescope, et en particulier un télescope pouvant faire partie d'un instrument de prise de vues embarqué sur un satellite pour assurer l'observation de la Terre dans des gammes de longueur d'onde infrarouge et/ou visible, à des fins d'études ou de prédictions météorologiques.

Un tel instrument est décrit dans l'article "SEVIRI, the new imager for Meteosat second generation", de F. Pasternak et al, paru dans "Proceedings of 1993 IGARSS Symposium, Volume III". Cet instrument comporte un ensemble optique de détection situé au niveau du plan focal du télescope, prenant des images de la Terre dans différents canaux de longueurs d'onde infrarouges ou visibles. Cet ensemble optique est associé à un système de refroidissement destiné à maintenir les détecteurs à une température aussi basse que possible, ce qui diminue le bruit détecté. Le télescope est un télescope de Ritchey-Chretien comportant un miroir concave primaire recevant une image d'entrée renvoyée par un miroir de balayage plan, et un miroir secondaire convexe disposé coaxialement au miroir primaire et renvoyant l'image réfléchie par celui-ci vers le plan focal du télescope à travers une ouverture centrale pratiquée dans le miroir primaire. Un inconvénient de ce télescope est la hauteur relativement importante entre le fond de l'unité de balayage et le plan focal du télescope (au moins 1500 mm). Cet encombrement réduit l'espace disponible pour le système de refroidissement des détecteurs, et limite donc les possibilités de refroidissement.

D'autres types de télescope ont également été proposés, notamment des télescopes de Gregory. Mais, leur encombrement cause également des difficultés, et ils nécessitent souvent des structures d'écran relativement complexes pour réduire les interférences provoquées par la lumière parasite.

Comme décrit dans la publication ci-dessus, le télescope est en général associé à une source d'étalonnage pour les canaux infrarouges. En phase d'étalonnage, cette source couvre l'ensemble de l'ouverture d'entrée du télescope, et doit donc être de dimension relativement importante, ce qui pose des problèmes d'encombrement et de régulation de température.

Le but de la présente invention est de proposer une nouvelle conception de télescope permettant de réduire certaines au moins des difficultés évoquées ci-dessus.

L'invention propose ainsi un télescope comprenant les caractéristiques de la revendication 1. Le télescope proposé est du type comprenant au moins un miroir concave primaire disposé pour recevoir l'image réfléchie par un miroir plan et collecter le flux lumineux et une optique relais pour agrandir l'image intermédiaire formée par le miroir primaire, l'optique-relais comportant un miroir secondaire et un miroir tertiaire ayant chacun une ouverture centrale et disposés coaxialement au miroir primaire, le miroir secondaire recevant l'image réfléchie par le miroir primaire à travers l'ouverture centrale du miroir tertiaire, et le miroir tertiaire, disposé au voisinage du plan focal du miroir primaire, recevant l'image réfléchie par le miroir secondaire et réfléchissant cette image à travers l'ouverture centrale du miroir secondaire. Le miroir plan, présentant une ouverture centrale destinée au passage de l'optique-relais, est placé en amont du miroir primaire au voisinage du point focal de ce dernier, et peut être utilisé pour balayer la scène observée.

La distance focale globale du télescope résulte des agrandissements successifs par les miroirs secondaire et tertiaire. Pour une même distance focale globale, on peut alors réduire les dimensions globales du télescope. En outre, le partage de l'agrandissement entre les deux miroirs diminue la sensibilité du télescope aux défauts d'alignement.

Un avantage important de ce télescope résulte du fait que l'ouverture centrale dans le miroir tertiaire peut être de section réduite, du fait de sa disposition au voisinage du plan focal du miroir primaire. Cette petite ouverture du miroir tertiaire ne laisse passer que peu de rayonnement parasite vers le miroir secondaire et le plan focal du télescope.

Dans une configuration optimale, le miroir secondaire est concave et le miroir tertiaire est convexe.

La pupille d'entrée du télescope peut être définie simplement par un diaphragme disposé coaxialement entre les miroirs secondaire et tertiaire.

Lorsque le miroir tertiaire est situé -légèrement- au-delà du plan focal du miroir primaire relativement à la position de ce dernier, on peut munir le télescope d'une source d'étalonnage et d'un mécanisme permettant d'amener cette source en une position correspondant sensiblement au point focal du miroir primaire. La source d'étalonnage peut alors être de dimensions réduites tout en couvrant bien l'entrée de l'optique-relais, ce qui apporte une amélioration considérable aux sources d'étalonnage de grandes dimensions utilisées jusqu'à présent. Il est d'ailleurs possible de prévoir plusieurs sources d'étalonnage, correspondant par exemple à plusieurs températures de référence ou à plusieurs longueurs d'onde.

D'autres particularités et avantages de la présente invention apparaîtront dans la description ci-après d'un mode de réalisation préféré mais non limitatif, en référence aux dessins annexés, dans lesquels :
- la figure 1 est un schéma montrant l'agencement des miroirs dans un télescope selon l'invention ;
- la figure 2 est une vue en coupe axiale illustrant le positionnement d'une source lumineuse d'étalonnage auprès du miroir tertiaire ;
- la figure 3 est une vue globale en coupe longitudinale d'un télescope selon l'invention ;
- la figure 4 est une vue en coupe transversale de ce télescope suivant le plan IV-IV indiqué à la figure 3 ; et
- la figure 5 est une vue en coupe analogue à celle de la figure 3 montrant à plus grande échelle l'optique-relais du télescope.

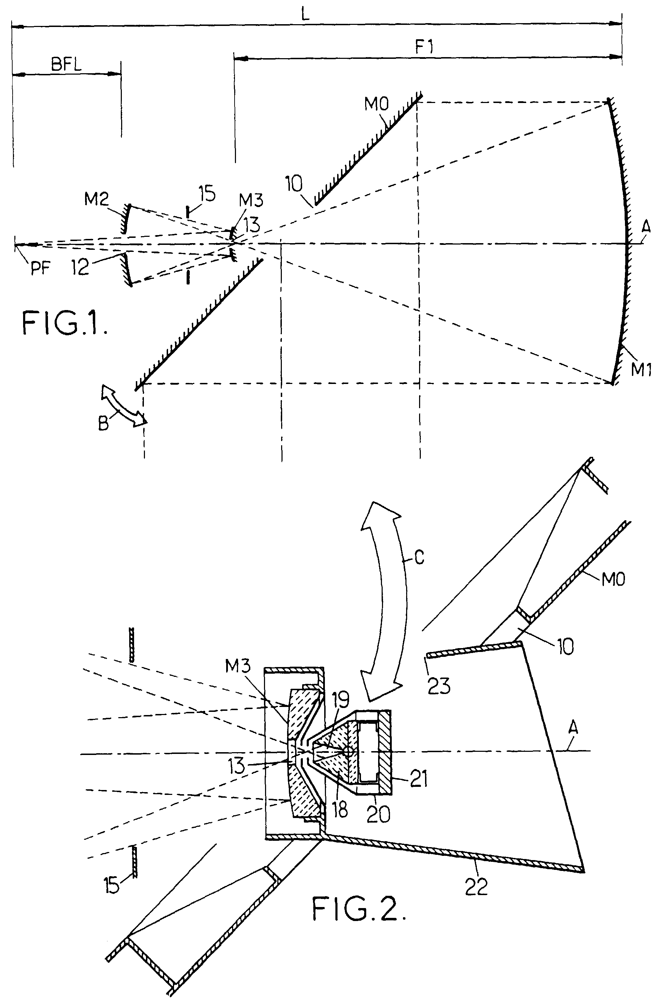

Le télescope schématisé sur la figure 1 comprend un miroir concave primaire M1 renvoyant l'image d'entrée vers une optique-relais comportant un miroir concave secondaire M2 et un miroir convexe tertiaire M3. Les miroirs M2 et M3 sont disposés coaxialement au miroir M1, perpendiculairement à l'axe optique A, et sont pourvus chacun d'une ouverture centrale 12, 13. Le miroir tertiaire M3 est disposé au voisinage du plan focal du miroir primaire M1, légèrement au-delà de ce plan focal relativement au miroir primaire M1. L'image réfléchie par le miroir M1 traverse l'ouverture centrale 13 du miroir tertiaire M3 pour parvenir à la surface réfléchissante du miroir secondaire M2. Le miroir M2 agrandit l'image et la réfléchit vers la surface réfléchissante du miroir M3. Celui-ci agrandit encore l'image et la réfléchit vers le point focal PF du télescope à travers l'ouverture centrale 12 du miroir secondaire M2. Les chemins optiques sont indiqués par des lignes en tirets sur les figures.

Derrière le point focal PF sont situés un ensemble optique de détection et un système de refroidissement classiques, par exemple du type décrit dans la publication citée en introduction.

L'ensemble est destiné à être monté à bord d'un satellite géostationnaire pour l'observation de la Terre. Pour réaliser une image de la scène observée, une première direction de balayage est fournie par la rotation du satellite sur lui-même, et une seconde direction de balayage est fournie par un miroir de balayage plan M0 renvoyant l'image d'entrée sur le miroir primaire M1. Le miroir de balayage M0 est également situé au voisinage du plan focal du miroir M1, légèrement en deçà de ce plan focal relativement à la position du miroir M1. Le miroir de balayage M0 est pourvu d'une ouverture centrale 10 destinée à laisser passer la lumière du miroir M1 vers l'optique-relais. Le miroir de balayage M0 peut être orienté en le faisant pivoter sur lui-même comme indiqué par la flèche B sur la figure 1.

L'agencement du télescope permet de disposer un diaphragme 15 dans l'optique-relais, coaxialement entre les miroirs secondaire et tertiaire M2, M3, pour définir la pupille du télescope.

La configuration à trois miroirs permet une large gamme de dimensions pour le télescope. On peut notamment obtenir une distance focale globale importante avec une longueur globale L (entre le miroir primaire M1 et le point focal PF du télescope) relativement courte, par un choix approprié de la distance focale F1 du miroir M1, de la distance focale arrière BFL (entre le miroir M2 et le point focal PF), et de la distance entre les miroirs M2 et M3.

Le diamètre du trou central 13 du miroir M3 est typiquement choisi pour être inférieur à 40 % du diamètre du miroir M3, pour limiter l'obscurcissment. Cette condition détermine la distance maximale entre le miroir M3 et le plan focal du miroir M1, qui est de l'ordre du diamètre du trou 13 multiplié par le rapport F1/D1 entre la distance focale F1 et le diamètre D1 du miroir primaire.

Avec pour objectifs les paramètres d'encombrement et les paramètres optiques suivants :
diamètre de M1 : 500 mm,
distance focale globale : 4 473 mm (rapport d'échelle de 125 µm/km au niveau du plan focal du télescope),
longueur globale L : 1 100 mm,
champ de vision : +/- 10 mm (au niveau du plan focal du télescope),
on a par exemple sélectionné les paramètres dimensionnels suivants :
distance focale F1 de M1 : 700 mm,
rapport d'agrandissement de M2 : 1,37,
rapport d'agrandissement de M3 : 4,67,
distance entre M2 et M3 : 190 mm,
distance focale arrière BFL : 200 mm.
diamètre du miroir M3 : 46 mm
diamètre du miroir M2 : 145 mm
diamètre du trou 13 : 10 mm
diamètre du trou 12 : 34 mm

Le point focal du miroir primaire M1 est situé à 10 mm du miroir M3 afin d'être accessible pour l'étalonnage comme il sera expliqué ci-après. L'obscurcissement central dû aux trous 12, 13 nécessaires dans les miroirs M2, M3 est maintenu inférieur à 0,3.

Le miroir M3 peut être un miroir convexe sphérique, ce qui est plus facile à fabriquer qu'un miroir convexe asphérique. Les miroirs M1 et M2 peuvent être des miroirs asphériques elliptiques concaves, M1 étant approximativement parabolique et M2 approximativement sphérique pour faciliter leur fabrication et leur vérification. L'agencement de l'invention n'impose pas de choix particulier pour le matériau des miroirs. On pourra notamment utiliser, de façon classique, le Zérodur ou les composites ultra-légers CSiC.

Lorsque l'ensemble optique de détection situé en aval du télescope requiert une procédure d'étalonnage, on peut utiliser une source d'étalonnage telle que celle représentée sur la figure 2. Un avantage important de l'invention est que cette source peut être de dimensions réduites lorsqu'on la place au niveau du point focal du miroir primaire M1. Ce point focal est accessible étant donné que le miroir M3 est situé légèrement au-delà de ce point focal relativement à la position du miroir M1.

Dans l'agencement représenté à la figure 2, la source d'étalonnage 18 est une source infrarouge constituée par un corps noir ayant des caractéristiques d'émission bien déterminées. L'émissivité de la source peut être rendue très proche de 1 grâce à un effet de cavité : on ménage alors dans le corps noir une cavité 19 ouverte vers l'ouverture centrale 13 du miroir M3. Le support 20 de la source 18 est muni sur sa face arrière d'une barrière 21 qui arrête le rayonnement provenant du miroir M1 pendant la procédure d'étalonnage. Le télescope comporte un mécanisme, non représenté sur la figure 2, permettant d'amener la source 18 à la position correspondant au point focal du miroir M1. On voit sur la figure 2 qu'un écran de forme tronconique 22 est prévu à l'arrière du miroir M3, avec sa base large ouverte vers le miroir M1. Pour procéder à l'étalonnage, la source 18 peut être amenée au point focal du miroir M1 à travers une ouverture 23 prévue dans l'écran 22, comme l'indique la flèche C sur la figure 2.

Comme la pupille du télescope est définie entre le miroir M2 et le plan focal du miroir M1, l'étalonnage au moyen de la source 18 peut être pratiqué sur toute l'ouverture du télescope, et les faisceaux optiques utilisés sont les mêmes que lors de la prise d'image normale, ce qui est important pour la précision de l'étalonnage. L'étalonnage ne prend pas en compte la contribution du miroir de balayage M0 et du miroir primaire M1, mais cette contribution peut aisément être évaluée par le calcul, et prise en compte sous forme d'un terme correctif dans la procédure d'étalonnage.

Le télescope peut comporter plusieurs sources d'étalonnage infrarouges et/ou visibles selon les besoins, le mécanisme d'amenée étant agencé pour amener l'une d'entre elles au niveau du point focal du miroir primaire.

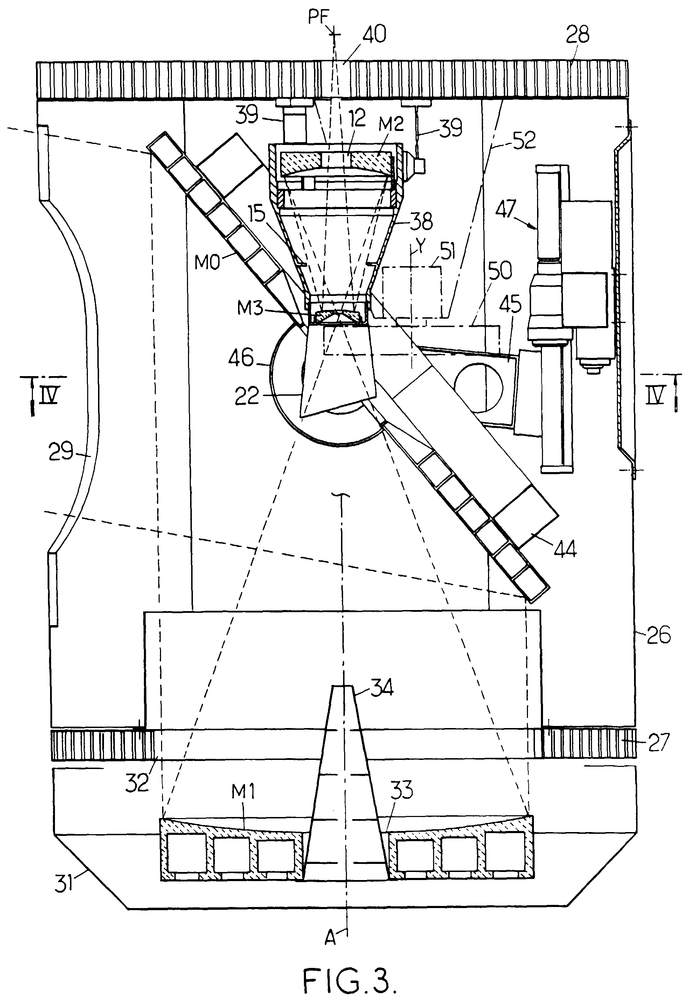

La constitution d'un exemple de télescope selon l'invention est illustrée de façon plus détaillée sur les figures 3 à 5. Dans cet exemple, les éléments optiques sont montés dans une structure principale 26 en forme de cylindre à base octogonale, fermé à ses deux extrémités par des parois 27, 28 en nid d'abeille. La structure sera en général en matériau léger, par exemple, en fibres de carbone, et couverte par un matériau d'isolation thermique (non représenté). Une fenêtre d'entrée 29 est prévue sur un côté du cylindre 26. Le miroir de balayage M0 est situé en regard de cette fenêtre 29. Il réfléchit l'image d'entrée vers le miroir M1 monté sur un support 31 en arrière de la paroi 27, qui comporte une ouverture centrale 32 pour laisser passer l'image d'entrée vers le miroir M1.

Le miroir M1 comporte également une ouverture centrale 33. Un écran 34 de forme tronconique est disposé coaxialement devant le miroir primaire M1, avec sa petite base ouverte vers l'ouverture centrale 13 du miroir tertiaire M3, pour éviter que de la lumière parvienne directement au point focal PF du télescope à travers les ouvertures centrales 13, 12 des miroirs tertiaire et secondaire.

L'optique-relais est installée dans une structure formant écran, qui comporte, outre l'écran 22 précédemment décrit en référence à la figure 2, un autre écran 38 de forme générale tronconique qui entoure l'espace compris entre les miroirs M2 et M3 et supporte le diaphragme 15. Cette structure est fixée à la paroi 28 au moyen d'une monture isostatique 39.

Le point focal PF du télescope est situé au-delà de la paroi 28 qui comporte en son centre une petite ouverture 40 pour laisser passer le rayonnement issu de l'optique-relais jusqu'au point focal PF.

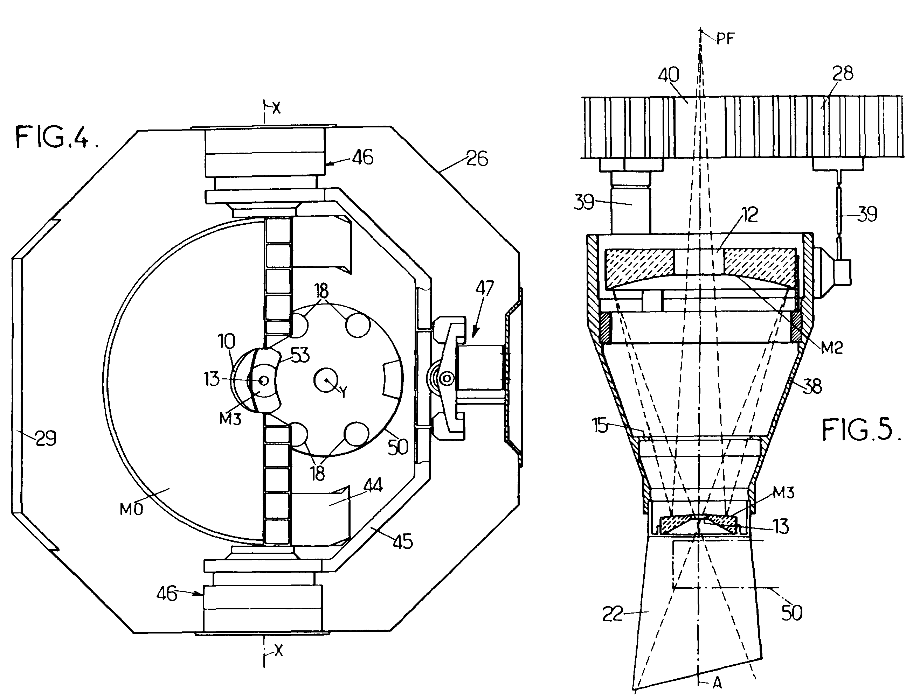

Le miroir de balayage M0 est fixé par sa face arrière sur un support 44 qui le relie à un bras d'orientation 45 (figures 3 et 4). Le bras 45 est en forme générale de C, dont les deux extrémités sont montées pivotantes dans des paliers 46 dont la partie fixe est solidaire de la structure cylindrique 26. Les paliers 46 définissent l'axe de rotation X du miroir de balayage M0. Cet axe X, qui est compris dans le plan du miroir M0, est perpendiculaire à l'axe central de la fenêtre d'entrée 29, et à l'axe optique A des miroirs M1, M2, M3. L'entraînement en rotation du miroir M0 est assuré par un mécanisme à vérins 47 qui fait coulisser la partie centrale du bras d'orientation 45, dans un sens ou dans l'autre, parallèlement à l'axe optique A. Le mécanisme 47 est fixé sur la structure cylindrique 26, sur le côté opposé à la fenêtre d'entrée 29. Les paliers 46 peuvent incorporer, de façon classique, un dispositif de blocage destiné à être mis en service lors du lancement du satellite.

Les figures 3 et 4 montrent également (en traits mixtes sur la figure 3), les moyens permettant d'amener une source d'étalonnage au niveau du point focal du miroir primaire M1. Quatre sources 18 sont montées à la périphérie d'un disque 50 disposé perpendiculairement à l'axe optique A, en position excentrée. Ce disque 50 peut pivoter autour de son axe Y sous l'action d'un moteur 51. Le moteur 51 est fixé à la paroi 28 par l'intermédiaire d'un support 52. Le disque 50 est placé approximativement au niveau du plan focal du miroir M1, en arrière de l'optique-relais relativement à la position de la fenêtre d'entrée 29, l'axe optique A étant au niveau de la périphérie du disque 50. En commandant le moteur 51, on peut ainsi amener sélectivement l'une des sources 18 au niveau du point focal du miroir primaire. La périphérie du disque 50 comporte également une encoche 53 qui, lorsqu'elle se trouve dans la position illustrée à la figure 4, libère l'axe optique A pour laisser passer l'image provenant du miroir primaire, et permettre ainsi le fonctionnement normal du télescope en dehors des phases d'étalonnage.

## Revendications

1. Télescope comprenant au moins un miroir concave primaire (M1) disposé pour recevoir une image d'entrée, et une optique-relais (M2, M3) pour agrandir l'image intermédiaire réfléchie par le miroir primaire, caractérisé en ce que l'optique-relais comporte un miroir secondaire (M2) et un miroir tertiaire (M3) ayant chacun une ouverture centrale (12,13) et disposés coaxialement (A) au miroir primaire (M1), en ce que le miroir secondaire (M2) est agencé pour recevoir l'image réfléchie par le miroir primaire (M1) à travers l'ouverture centrale (13) du miroir tertiaire (M3), et en ce que le miroir tertiaire (M3), disposé au voisinage du plan focal du miroir primaire (M1), est agencé pour recevoir l'image réfléchie par le miroir secondaire (M2) et réfléchir cette image à travers l'ouverture centrale (12) du miroir secondaire (M2).

2. Télescope selon la revendication 1, caractérisé en ce que le miroir secondaire (M2) est concave, et en ce que le miroir tertiaire (M3) est convexe.

3. Télescope selon la revendication 1 ou 2, caractérisé en ce que l'optique-relais comporte en outre un diaphragme (15) disposé coaxialement (A) entre les miroirs secondaire et tertiaire (M2,M3) définissant une pupille dans l'espace optique entre les miroirs primaire et secondaire (M1,M2).

4. Télescope selon l'une quelconque des revendication 1 à 3, caractérisé en ce que le miroir tertiaire (M3) est situé au-delà du plan focal du miroir primaire (M1) relativement à la position de ce dernier.

5. Télescope selon la revendication 4, caractérisé en ce qu'il comprend au moins une source d'étalonnage (18) et un mécanisme (50,51) permettant d'amener (C) cette source en une position correspondant sensiblement au point focal du miroir primaire (M1) pour effectuer un étalonnage de l'instrument avec un faisceau d'étendue géométrique identique à celle de la prise d'image.

6. Télescope selon la revendication 5, caractérisé en ce qu'il comprend plusieurs sources d'étalonnage (18), ledit mécanisme (50,51) étant agencé pour amener (C) sélectivement l'une des sources à la position correspondant sensiblement au point focal du miroir primaire (M1).

7. Télescope selon l'une quelconque des revendications 1 à 6, caractérisé en ce que l'image d'entrée est envoyée sur le miroir primaire (M1) par un miroir de balayage (M0) plan et orientable (B), disposé au voisinage du plan focal du miroir primaire (M1) et pourvu d'une ouverture centrale (10).

8. Télescope selon l'une quelconque des revendication 1 à 7, caractérisé en ce que le miroir tertiaire (M3) est sensiblement sphérique, et en ce que les miroirs primaire et secondaire (M1,M2) sont asphériques.

## Patentansprüche

1. Teleskop mit wenigstens einem ersten konkaven Spiegel (M1), der derart angeordnet ist, daß er ein Eingangsbild erhält, und einem optischen Relais (M2, M3), um das durch den ersten Spiegel reflektierte Zwischenbild zu vergrößern, dadurch gekennzeichnet, daß das optische Relais einen zweiten Spiegel (M2) und einen dritten Spiegel (M3) umfaßt, die jeweils eine Zentralöffnung (12, 13) aufweisen und koaxial (A) zum ersten Spiegel (M1) angeordnet sind, daß der zweite Spiegel (M2) derart ausgebildet ist, daß er das von dem ersten Spiegel (M1) durch die Zentralöffnung (13) des dritten Spiegels (M3) reflektierte Bild erhält, und daß der dritte Spiegel (M3), der in der Nähe der Brennebene des ersten Spiegels (M1) angeordnet ist, derart ausgebildet ist, daß er das durch den zweiten Spiegel (M2) reflektierte Bild erhält und dieses Bild durch die Zentralöffnung (12) des zweiten Spiegels (M2) reflektiert.

2. Teleskop nach Anspruch 1, dadurch gekennzeichnet, daß der zweite Spiegel (M2) konkav ist, und daß der dritte Spiegel (M3) konvex ist.

3. Teleskop nach Anspruch 1 oder 2, dadurch gekennzeichnet, daß das optische Relais ferner eine Blende (15) umfaßt, die koaxial (A) zwischen dem zweiten und dritten Spiegel (M2, M3) angeordnet ist und in dem optischen Raum zwischen dem ersten und dem zweiten Spiegel (M1, M2) eine Pupille begrenzt.

4. Teleskop nach einem der Ansprüche 1 bis 3, dadurch gekennzeichnet, daß der dritte Spiegel (M3) jenseits der Brennebene des ersten Spiegels (M1), in bezug zur Position des letzteren, angeordnet ist.

5. Teleskop nach Anspruch 4, dadurch gekennzeichnet, daß es wenigstens eine Eichquelle (18) und einen Mechanismus (50, 51) umfaßt, der es gestattet, diese Quelle in eine Position zu verstellen (C), die im wesentlichen einem Brennpunkt des ersten Spiegels (M1) entspricht, um eine Eichung des Instruments mit einem Strahlbündel von identischer geometrischer Ausdehnung wie die der Bildaufnahme zu bewirken.

6. Teleskop nach Anspruch 5, dadurch gekennzeichnet, daß es mehrere Eichquellen (18) umfaßt, wobei der Mechanismus (50, 51) derart ausgebildet ist, daß er selektiv eine der Quellen an der im wesentlichen im Brennpunkt des ersten Spiegels (M1) entsprechenden Position verstellt (C).

7. Teleskop nach einem der Ansprüche 1 bis 6, dadurch gekennzeichnet, daß das Eingangsbild durch einen ebenen und orientierbaren (B) Ablenkspiegel (M0), der in der Nähe der Brennebene des ersten Spiegels (M1) angeordnet ist und mit einer Zentralöffnung (10) versehen ist, auf den ersten Spiegel (M1) gelenkt wird.

8. Teleskop nach einem der Ansprüche 1 bis 7, dadurch gekennzeichnet, daß der dritte Spiegel (M3) im wesentlichen sphärisch ist, und daß der erste und der zweite Spiegel (M1, M2) asphärisch sind.

## Claims

1. Telescope comprising at least one primary concave mirror (M1) disposed to receive an incoming image, and a relay optics (M2,M3) to enlarge the image reflected by the primary mirror, characterized in that the relay optics includes a secondary mirror (M2) and a tertiary mirror (M3) each having a central aperture (12, 13) and which mirrors are disposed coaxially (A) with the primary mirror (M1), in that the secondary mirror (M2) is arranged for receiving the image reflected by the primary mirror (M1) through the central aperture (13) of the tertiary mirror (M3), and in that the tertiary mirror (M3), which is disposed in the vicinity of the focal plane of the primary mirror (M1), is arranged for receiving the image reflected by the secondary mirror (M2) and for reflecting this image through a central aperture (12) of the secondary mirror (M2).

2. Telescope according to Claim 1, characterized in that the secondary mirror (M2) is concave, and in that the tertiary mirror (M3) is convex.

3. Telescope according to Claim 1 or 2, characterized in that the relay optics further includes a diaphragm (15) disposed coaxially (A) between the secondary and tertiary mirrors (M2, M3) defining a pupil in the optical space between the primary and secondary mirrors (M1, M2).

4. Telescope according to any one of Claim [sic] 1 to 3, characterized in that the tertiary mirror (M3) is situated beyond the focal plane of the primary mirror (M1) relative to the position of the latter.

5. Telescope according to Claim 4, characterized in that it comprises at least one calibration source (18) and a mechanism (50, 51) permitting this source to be brought (C) into a position substantially corresponding to the focal point of the primary mirror (M1) to carry out a calibration of the instrument with a beam of geometric extent identical to that of the image recording.

6. Telescope according to Claim 5, characterized in that it comprises a plurality of calibration sources (18), said mechanism (50, 51) being arranged to bring selectively (C) one of the sources to the position substantially corresponding to the focal point of the primary mirror (M1).

7. Telescope according to any one of Claims 1 to 6, characterized in that the incoming image is passed to the primary mirror (M1) by a scanning mirror (M0) which is plane and orientable (B), and which is disposed in the vicinity of the focal plane of the primary mirror (M1) and provided with a central aperture (10).

8. Telescope according to any one of Claim [sic] 1 to 7, characterized in that the tertiary mirror (M3) is substantially spherical, and in that the primary and secondary mirrors (M1, M2) are aspherical.
